(19) Europäisches Patentamt / European Patent Office / Office européen des brevets

(11) **EP 4 328 271 A1**

(12) **DEMANDE DE BREVET EUROPEEN**

(43) Date de publication:
**28.02.2024 Bulletin 2024/09**

(21) Numéro de dépôt: **22191781.8**

(22) Date de dépôt: **23.08.2022**

(51) Classification Internationale des Brevets (IPC):
**C09C 1/00** (2006.01)   **C04B 35/44** (2006.01)
**C04B 35/628** (2006.01)   **C04B 35/488** (2006.01)
**C04B 35/645** (2006.01)   **C04B 35/117** (2006.01)
**C04B 35/119** (2006.01)   **C04B 35/626** (2006.01)

(52) Classification Coopérative des Brevets (CPC):
**C04B 35/44; C04B 35/117; C04B 35/119; C04B 35/488; C04B 35/62685; C04B 35/6455; C09C 1/0009;** C04B 2235/3217; C04B 2235/3224; C04B 2235/3225; C04B 2235/3229; C04B 2235/3241; C04B 2235/3244; C04B 2235/3246; C04B 2235/764;        (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **The Swatch Group Research and Development Ltd**
**2074 Marin (CH)**

(72) Inventeurs:
• **FORNABAIO, Marta**
  **1023 Crissier (CH)**
• **TABARD, Lucie**
  **2000 Neuchâtel (CH)**
• **BOURBAN, Stewes**
  **1589 Chabrey (CH)**

(74) Mandataire: **ICB SA**
**Faubourg de l'Hôpital, 3**
**2001 Neuchâtel (CH)**

(54) **ARTICLE EN CERAMIQUE DE COULEUR VIVE ET SON PROCEDE DE FABRICATION**

(57)   L'invention concerne un article de couleur réalisé dans une céramique comprenant une matrice à base d'oxydes et un composant de la famille des grenats d'aluminium dopé ou co-dopé.

La présente invention se rapporte également au procédé de fabrication dudit article.

Fig. 1

(52) Classification Coopérative des Brevets (CPC):
(Cont.)
C04B 2235/77; C04B 2235/80; C04B 2235/96;
C04B 2235/9661

**Description**

Domaine technique de l'invention

La présente invention se rapporte à un article en céramique de couleur vive et notamment à un composant horloger d'habillage ou du mouvement réalisé dans un matériau à base d'oxydes tels que l'alumine. Elle se rapporte également au procédé de fabrication dudit article.

Arrière-plan technologique

Les céramiques colorées sont couramment produites industriellement par mélange d'une matrice à base d'oxyde métallique, par ex. $Al_2O_3$, $ZrO_2$ et leurs composites, et d'un pigment colorant. Dans certains cas, la céramique peut être colorée par dopage avec différents atomes rentrant dans la structure cristalline. Les couleurs ainsi obtenues sont généralement pâles. Par exemple, la coloration jaune de la céramique est souvent obtenue par dopage au praséodyme ou par ajout de pigment à base d'oxyde de tungstène et/ou d'oxyde de vanadium. La couleur obtenue est généralement jaune pâle ou virant sur l'orange.

Une alternative a été proposée dans le domaine horloger dans le document WO 2018/172428 divulguant la fabrication d'une pièce céramique de couleur vive par incorporation d'un pigment encapsulé à une matrice d'oxyde métallique adaptée pour laisser passer la lumière. Plus précisément, le procédé envisage l'utilisation d'un frittage non conventionnel sous pression dans le but de densifier la matière, procédé complexe à mettre œuvre de manière industrielle.

Résumé de l'invention

La présente invention a pour objet de proposer une nouvelle composition de céramique de couleur vive permettant de réaliser un article avec un procédé peu onéreux.

Plus précisément, la présente invention se rapporte à un article de couleur réalisé dans une céramique comprenant une matrice à base d'oxydes et un composant de la famille des grenats d'aluminium dopé ou co-dopé.

Plus en détail, le composant de la famille des grenats d'aluminium dopé ou co-dopé, tel que le grenat d'aluminium yttrium dopé au cérium (YAG:Ce), donne à la céramique à base d'oxydes une couleur vive et brillante. Un tel élément colorant représente non seulement une alternative aux pigments de coloration conventionnels mais permet également d'obtenir une teinte plus intense et d'élargir significativement la gamme de couleurs possibles. En outre, le développement d'un composite par ajout d'une matrice à base d'oxydes permet de s'affranchir de l'utilisation du YAG pur avec une réduction importante des coûts et une amélioration significative de la ténacité et de l'usinabilité.

Lorsque le composant de la famille des grenats d'aluminium est dopé par le chrome ou par un élément de la famille des lanthanides tel que, par exemple, le cérium, le néodyme, l'erbium, l'holmium et l'ytterbium, une couleur intense et vive est obtenue. En particulier, lorsqu'il est dopé au cérium, une couleur jaune est obtenue. Cette couleur vive n'est pas atteignable par mélange avec des pigments commerciaux ni par dopage avec différents atomes. Lorsqu'il est dopé au néodyme, une coloration violette est obtenue et lorsqu'il est dopé au chrome une coloration allant du vert au rouge en fonction de son état d'oxydation est obtenue. Lorsqu'il est dopé à l'erbium, une couleur rose est obtenue. Lorsqu'il est dopé à l'ytterbium, une couleur verte est obtenue. Le co-dopage avec un ou plusieurs éléments additionnels choisis parmi le chrome et un élément de la famille des lanthanides, tel que le cérium, l'erbium, l'ytterbium, l'holmium et le néodyme, permet de moduler ces couleurs et ainsi d'élargir la gamme de couleurs atteignable. L'utilisation d'un composant de la famille des grenats d'aluminium dopé ou co-dopé permet ainsi d'obtenir des couleurs vives et brillantes aux propriétés ré-émissives.

L'article ainsi obtenu avec ces différents dopants a une couleur vive avec une composante L dans l'espace colorimétrique Lab supérieure ou égale à 80, de préférence supérieure ou égale à 85, plus préférentiellement supérieure ou égale à 90.

Il a une dureté supérieure ou égale à 1000 HV10, de préférence supérieure ou égale à 1200 HV10, plus préférentiellement supérieure ou égale à 1550 HV10.

Il a une ténacité $K_{iC}$ comprise entre 1.7 et 6 MPa $\sqrt{m}$, typiquement entre 2 et 4.5 MPa $\sqrt{m}$.

La présente invention se rapporte également au procédé de fabrication dudit article comportant les étapes suivantes :

- Réalisation d'un mélange de base, aussi appelé premier mélange, avec les oxydes et le composant de la famille des grenats d'aluminium dopé ou co-dopé, et ce éventuellement en milieu liquide,

- Réalisation d'un deuxième mélange comprenant le premier mélange et un système de liant organique,

- Granulation dudit deuxième mélange,

- Formation d'une ébauche ayant la forme de l'article,

- Frittage de l'ébauche sous air à une température de maintien comprise entre 1500 et 1800°C, de préférence entre 1600 et 1700°C, pendant une période comprise entre 20 minutes et 20 heures, de préférence entre 1 heure et 5 heures.

Le procédé proposé, par mélange de poudres et frittage conventionnel est facilement industrialisable et a un plus faible impact économique par rapport aux procédés actuels envisageant une fabrication par SPS (Spark Plasma Sintering) ou avec une composition comprenant du YAG pur.

D'autres caractéristiques et avantages de l'invention apparaîtront à la lecture de la description détaillée qui va suivre, en référence au dessin annexé.

Brève description de la figure

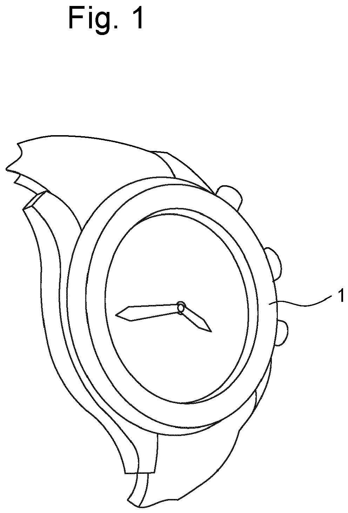

La figure 1 représente une pièce d'horlogerie comprenant une carrure réalisée avec le matériau céramique selon l'invention.

Description détaillée de l'invention

La présente invention se rapporte à un article réalisé dans un matériau céramique à base d'oxydes. L'article peut être un article décoratif tel qu'un élément constitutif de montres, bijoux, bracelets, etc. ou plus généralement une partie externe d'un élément portable comme une coque d'un téléphone mobile. Dans le domaine horloger, cet article peut être un composant d'habillage tel qu'une carrure, un fond, une lunette, un poussoir, un maillon de bracelet, un cadran, une aiguille, un index de cadran, etc. A titre illustratif, une carrure réalisée avec le matériau céramique selon l'invention est représentée à la figure 1. Il peut également s'agir d'un composant du mouvement tel qu'une platine ou une masse oscillante.

Le matériau céramique comporte la matrice à base d'oxydes. On peut citer comme oxydes le $ZrO_2$, $Al_2O_3$, $TiO_2$, $SiO_2$, $MgAl_2O_4$ et ZnO ou un mélange de ces oxydes tels que du $Al_2O_3$ + $ZrO_2$. En présence de zircone ($ZrO_2$), cette dernière est généralement stabilisée à l'yttrium, au cérium, au calcium ou au magnésium. De préférence, la matrice est à base d'$Al_2O_3$. Le matériau céramique comprend en outre un composant colorant phosphorescent de la famille des grenats d'aluminium dopé ou co-dopé. Le pourcentage en poids du composant de la famille des grenats d'aluminium dopé ou co-dopé est compris entre 5 et 85%, de préférence entre 5 et 70%, plus préférentiellement entre 10 et 60%, par rapport au poids total du matériau céramique. Ainsi, le matériau céramique comprend en poids entre 15 et 95%, de préférence entre 30 et 95%, plus préférentiellement entre 40 et 90%, d'oxydes et entre 5 et 85%, de préférence entre 5 et 70%, plus préférentiellement entre 10 et 60%, du composant de la famille des grenats d'aluminium dopé ou co-dopé.

Pour les grenats d'aluminium, il peut s'agir du grenat d'aluminium yttrium (YAG) ou du grenat d'aluminium luthénium (LuAg). De préférence, il s'agit du grenat d'aluminium yttrium. Ces grenats sont dopés ou co-dopés respectivement avec un ou plusieurs des éléments de la famille des lanthanides : cérium, néodyme, holmium, erbium et ytterbium, ou par le chrome. De préférence, le grenat est dopé au cérium. Plus préférentiellement, il s'agit d'un grenat d'aluminium yttrium dopé au cérium. Encore plus préférentiellement, l'article comporte une matrice à base d'alumine ($Al_2O_3$) et du grenat d'aluminium yttrium dopé au cérium (YAG:Ce). Cette céramique peut également comporter des impuretés éventuelles avec une teneur inférieure ou égale à 0.2% en poids, voire à 0.1% en poids.

Avantageusement, la céramique est constituée de la matrice à base d'oxydes, du composant de la famille des grenats dopé ou co-dopé et des éventuelles impuretés. De préférence, la céramique est constituée de la matrice à base d'alumine ($Al_2O_3$), du grenat d'aluminium yttrium dopé au cérium (YAG:Ce) et des impuretés éventuelles.

Selon l'invention, le composant de la famille des grenats est dopé avec un des éléments précités et éventuellement co-dopé avec un ou plusieurs autres des éléments précités avec un pourcentage atomique total pour le dopant et le ou les éventuels co-dopants par rapport à ce composant compris entre 0.1 et 50%. Le dopage est au cérium lorsqu'une couleur jaune est souhaitée. De préférence, pour un dopage au cérium, le pourcentage atomique par rapport au composant de la famille des grenats est compris entre 0.5 et 10%, plus préférentiellement entre 1 et 5%. Le dopage est au chrome lorsqu'une couleur allant du vert au rouge selon le degré d'oxydation du chrome, est souhaitée. Pour un dopage au chrome, le pourcentage atomique par rapport au composant de la famille des grenats est compris entre 0.1 et 50%. Le dopage est au néodyme lorsqu'une coloration violette est souhaitée. De préférence, le pourcentage atomique par rapport au composant est compris entre 0.9 et 11%. Le dopage est à l'erbium lorsqu'une coloration rose est souhaitée avec un pourcentage atomique par rapport au composant compris entre 0.1 et 50%. Le dopage est à l'ytterbium lorsqu'une coloration verte est souhaitée avec un pourcentage atomique par rapport au composant compris entre 0.1 et 50%.

L'ajout d'un co-dopant permet de changer la couleur. Il pourrait par exemple s'agir d'un composant de la famille des grenats dopé au cérium et co-dopé avec du néodyme.

L'article avec un ou plusieurs dopants a une couleur vive ayant une composante L dans l'espace colorimétrique Lab supérieure ou égale à 80, de préférence supérieure ou égale à 85, plus préférentiellement supérieure ou égale à 90. Il a une dureté supérieure ou égale à 1000 HV10, de préférence supérieure ou égale à 1200 HV10, plus préférentiellement supérieure ou égale à 1550 HV10. Pour une matrice d'oxydes d'aluminium avec du grenat d'aluminium yttrium dopé au cérium, il a une dureté supérieure ou égale à 1400 HV10, de préférence supérieure ou égale à 1550 HV10. Pour une matrice d'oxydes de zirconium avec du grenat d'aluminium yttrium dopé au cérium, il a une dureté supérieure ou égale à 1250 HV10, de préférence supérieure ou égale à 1400 HV10. De même, pour une matrice d'oxydes d'aluminium et de zircone avec du grenat d'aluminium yttrium dopé au cérium, il a une dureté supérieure ou égale à 1250 HV10, de préférence à 1400 HV10. L'article a une ténacité $K_{iC}$ comprise entre 1.7 et 6 MPa $\sqrt{m}$, de préférence entre 2 et 4.5 MPa $\sqrt{m}$. Pour une matrice d'oxydes d'aluminium avec du grenat d'aluminium yttrium dopé au cérium, il a une ténacité $K_{iC}$ supérieure ou égale à 2 MPa $\sqrt{m}$. Pour une matrice d'oxydes d'aluminium et de zircone avec du grenat d'aluminium yttrium dopé au cérium, il a une ténacité $K_{iC}$ supérieure ou égale à 2.5 MPa $\sqrt{m}$. Pour une matrice d'oxydes de zirconium avec du grenat d'aluminium yttrium dopé au cérium, il a également une ténacité $K_{iC}$ supérieure ou égale à 2.5 MPa $\sqrt{m}$. L'article a une densité supérieure ou égale à 95%, de préférence supérieure ou égale à 97%, plus préférentiellement supérieure ou égale à 98%.

L'article en céramique avec la matrice d'alumine et le grenat d'aluminium yttrium dopé au cérium a une couleur jaune avec dans l'espace colorimétrique CIELAB (conforme aux normes CIE n°15, ISO 7724/1, DIN 5033 Teil 7, ASTM E-1164) une composante $L^*$ supérieure ou égale à 85, de préférence supérieure ou égale à 90, une composante $a^*$ comprise entre -5 et 15, de préférence entre -5 et 12 et une composante $b^*$ comprise entre 65 et 110, de préférence entre 70 et 97.

L'article en céramique avec la matrice d'alumine et de zircone et le grenat d'aluminium yttrium dopé au cérium a également une couleur jaune avec dans l'espace colorimétrique CIELAB (conforme aux normes CIE n°15, ISO 7724/1, DIN 5033 Teil 7, ASTM E-1164) une composante $L^*$ supérieure ou égale à 85, de préférence supérieure ou égale à 90, une composante $a^*$ comprise entre -5 et 5, de préférence entre -5 et 2 et une composante $b^*$ comprise entre 45 et 80, de préférence entre 50 et 70.

L'article est fabriqué par frittage avec le procédé consistant à:

- Réaliser le mélange de base, aussi appelé premier mélange, avec les différents composés précités et ce éventuellement en milieu liquide,

- Réaliser un deuxième mélange comprenant le premier mélange et un système de liant organique (paraffine, polyéthylène, polyvinyle acétate, etc.),

- Granuler et, le cas échéant, sécher ledit deuxième mélange, par exemple, dans un atomiseur. De préférence, les granulats ont une taille d50 comprise entre 10 et 100 $\mu$m, et, de préférence, entre 40 et 60 $\mu$m,

- Former une ébauche en conférant à ce deuxième mélange granulé la forme de l'article désiré, par exemple, par injection ou pressage. De préférence, la mise en forme est réalisée par pressage uniaxial et/ou pressage isostatique à froid (CIP),

- Fritter l'ébauche sous air à une température de maintien comprise entre 1500 et 1800°C, de préférence entre 1600 et 1700°C, pendant une période comprise entre 20 minutes et 20 heures, de préférence entre 1 heure et 5 heures. Cette étape permet d'atteindre une densification supérieure à 97% par rapport à la densité théorique. Cette étape peut être précédée d'une étape de déliantage thermique dans une gamme de températures comprise entre 200 et 1200°C. Il pourrait également s'agir d'un déliantage solvant dans le cas d'une mise en forme par injection,

- Optionnellement, presser l'ébauche avec un pressage isostatique à chaud (HIP) à une température qui est de 50°C à 150°C inférieure à la température de frittage afin d'améliorer la densité finale de l'ébauche.

L'ébauche ainsi obtenue est refroidie. Elle peut ensuite être usinée, polie et décorée si nécessaire pour obtenir l'article désiré. La couleur étant présente dans la masse de l'ébauche, ces opérations de finition n'altèrent pas la couleur finale de l'article.

Des essais ont été réalisés pour les céramiques comprenant de l'alumine et du grenat d'aluminium yttrium dopé au cérium avec des pourcentages pour le grenat d'aluminium yttrium dopé au cérium (YAG:3Ce) compris entre 10 et 60% en poids. Des essais ont également été réalisés pour les céramiques comprenant une matrice d'alumine et de zircone stabilisée à l'yttrium et du grenat d'aluminium yttrium dopé au cérium avec un pourcentage pour le grenat d'aluminium yttrium dopé au cérium (YAG:3Ce) de 50% en poids. Des essais ont également été réalisés pour les céramiques comprenant une matrice de zircone et du grenat d'aluminium yttrium dopé au cérium avec un pourcentage de 20% en poids pour ce dernier. Dans tous ces essais, le dopage est de 3% atomique par rapport au grenat et la zircone est stabilisée. Les résultats sont donnés à la table 1 ci-après. Les mesures de dureté sont des duretés HV10. La ténacité a été déterminée sur base des mesures des longueurs des fissures aux quatre extrémités des diagonales de l'empreinte de dureté selon la formule :

$$K_{1c} = 0.0319 \frac{P}{al^{1/2}}$$

avec P qui est la charge appliquée (N), a qui est la demi-diagonale (m) et l qui est la longueur de la fissure mesurée (m).

Les valeurs colorimétriques Lab ont été mesurées sur les échantillons polis avec un spectrophotomètre CM-3610 A dans les conditions suivantes : mesures SCI (réflexion spéculaire incluse) et SCE (réflexion spéculaire exclue), inclinaison de 8°, zone de mesure MAV de 4 mm de diamètre.

Les échantillons ont été frittés sous air à une température comprise entre 1600°C et 1700°C avec un palier compris entre 2 et 4 heures. Tous les échantillons obtenus ont une couleur jaune. Les mesures de colorimétrie montrent un éclat très élevé avec des valeurs de L* supérieures à 90 contre des valeurs de L* d'environ 80 dans le cas de la zircone colorée par ajout d'oxyde de praséodyme. Egalement, les mesures de colorimétrie montrent une teinte jaune très élevée avec des valeurs de b* supérieures à 75 pour une matrice d'alumine, contre des valeurs de b* d'environ 30 dans le cas de la zircone colorée par ajout d'oxyde de praséodyme. Cette composante jaune s'intensifie avec l'augmentation de la teneur en grenat d'aluminium yttrium dopé au cérium. En revanche, la ténacité et la dureté diminuent avec cette augmentation de la teneur. En fonction de la teneur en grenat d'aluminim yttrium dopé au cérium, il est ainsi possible de moduler les propriétés et la couleur selon les besoins de l'application.

Pour les matrices comprenant de la zircone, le jaune est un peu moins intense avec des valeurs de b* de l'ordre de 50 mais néanmoins toujours supérieures aux valeurs de 30 dans le cas de la zircone colorée par ajout d'oxyde de praséodyme. En termes de dureté, des valeurs supérieures à 1250 HV10 sont obtenues. Pour la ténacité, des valeurs supérieures à 2.5 MPa √m sont obtenues.

Table 1

| Composition (%pds) | | | Colorimétrie | | | Propriétés | | |
|---|---|---|---|---|---|---|---|---|
| YAG :3Ce | Al$_2$O$_3$ | ZrO$_2$ | L* | a* | b* | Dureté [HV10] | Ténacité [M Pa√m] | Densité [%] |
| 10 | 90 | / | 94.8 | -3.5 | 76.7 | 1698 | 3.4 | 98.8 |
| 20 | 80 | / | 93.8 | 3.2 | 86.1 | 1680 | 4 | 99 |
| 40 | 60 | / | 95.3 | 6.9 | 92.5 | 1612 | 2.7 | 97.2 |
| 60 | 40 | / | 94.3 | 10.3 | 93.6 | 1600 | 2.3 | 99.5 |
| 20 | / | 80 | ** | ** | ** | 1460 | ** | 98 |
| 50 | 40 | 10 | 91 | -1.2 | 56.95 | >1250 | 2.95 | ** |
| ** non mesuré | | | | | | | | |

## Revendications

1. Article de couleur réalisé dans une céramique comprenant une matrice à base d'oxydes et un composant de la famille des grenats d'aluminium dopé ou co-dopé.

2. Article selon la revendication 1, **caractérisé en ce que** la céramique comprend la matrice à base d'oxydes avec une teneur en poids comprise entre 15 et 95% et le composant de la famille des grenats d'aluminium dopé ou co-dopé avec une teneur en poids comprise entre 5 et 85%.

3. Article selon l'une des revendications précédentes, **caractérisé en ce que** la céramique comprend la matrice à base d'oxydes avec une teneur en poids comprise entre 30 et 95%, de préférence entre 40 et 90%, et le composant de la famille des grenats d'aluminium dopé ou co-dopé avec une teneur en poids comprise entre 5 et 70%, de préférence entre 10 et 60%.

4. Article selon l'une des revendications précédentes, **caractérisé en ce que** le composant de la famille des grenats d'aluminium est dopé ou co-dopé avec un ou plusieurs éléments avec un pourcentage atomique total pour l'ensemble du ou des éléments compris entre 0.1 et 50% par rapport au composant de la famille des grenats d'aluminium.

5. Article selon l'une des revendications précédentes, **caractérisé en ce que** la famille des grenats d'aluminium dopé ou co-dopé comprend le grenat d'aluminium luthénium et le grenat d'aluminium yttrium et **en ce que** l'élément dopant ou co-dopant est choisi parmi le chrome ou un élément de la famille des lanthanides.

6. Article selon la revendication précédente, **caractérisé en ce que** l'élément de la famille des lanthanides est choisi parmi le cérium, le néodyme, l'erbium, l'holmium et l'ytterbium.

7. Article selon la revendication précédente, **caractérisé en ce que** pour un dopage au cérium, le pourcentage atomique par rapport au composant de la famille des grenats d'aluminium est compris entre 0.5 et 10%, de préférence entre 1 et 5%.

8. Article selon la revendication 6, **caractérisé en ce que** pour un dopage au néodyme, le pourcentage atomique par rapport au composant de la famille des grenats d'aluminium est compris entre 0.9 et 11%.

9. Article selon l'une des revendications précédentes, **caractérisé en ce que** la céramique comprend une matrice à base d'oxydes d'aluminium, d'oxydes de zirconium ou d'oxydes de zirconium stabilisé ou un mélange de ces oxydes.

10. Article selon la revendication 6, **caractérisé en ce que** la céramique comprend une matrice à base d'oxydes d'aluminium et un grenat d'aluminium yttrium dopé au cérium avec éventuellement un élément co-dopant.

11. Article selon l'une des revendications précédentes, **caractérisé en ce que** la céramique est constituée de la matrice à base d'oxydes et d'un composant de la famille des grenats d'aluminium dopé ou co-dopé et d'éventuelles impuretés.

12. Article selon l'une des revendications précédentes, **caractérisé en ce que** la céramique a dans l'espace colorimétrique CIELAB une composante L* supérieure ou égale à 80, de préférence supérieure ou égale à 85, plus préférentiellement supérieure ou égale à 90.

13. Article selon la revendication 10, **caractérisé en ce que** la céramique a dans l'espace colorimétrique CIELAB une composante a* comprise entre -5 et 15, de préférence entre -5 et 12 et une composante b* comprise entre 65 et 110, de préférence entre 70 et 97.

14. Article selon l'une des revendications précédentes, **caractérisé en ce que** la céramique a une dureté supérieure ou égale à 1000 HV10, de préférence supérieure ou égale à 1200 HV10, plus préférentiellement supérieure ou égale à 1550 HV10.

15. Article selon l'une des revendications précédentes, **caractérisé en ce que** la céramique a une ténacité $K_{iC}$ comprise entre 1.7 et 6 MPa √m, de préférence entre 2 et 4.5 MPa √m.

16. Article selon l'une des revendications précédentes, **caractérisé en ce qu'**il s'agit d'un composant d'habillage ou du mouvement en horlogerie, ou d'un composant de joaillerie ou bijouterie.

17. Procédé de fabrication d'un article selon l'une des revendications précédentes, comprenant les étapes suivantes :

    - Réalisation d'un mélange de base, aussi appelé premier mélange, avec les oxydes et le composant de la famille des grenats d'aluminium dopé ou co-dopé, selon l'une des revendications 1 à 11, et ce éventuellement en milieu liquide,
    - Réalisation d'un deuxième mélange comprenant le premier mélange et un système de liant organique,
    - Granulation dudit deuxième mélange,
    - Formation d'une ébauche ayant la forme de l'article,
    - Frittage de l'ébauche sous air à une température de maintien comprise entre 1500 et 1800°C, de préférence entre 1600 et 1700°C, pendant une période comprise entre 20 minutes et 20 heures, de préférence entre 1 heure et 5 heures.

**18.** Procédé de fabrication selon la revendication précédente, **caractérisé en ce qu'**il comporte après l'étape de frittage une étape de pressage isostatique à chaud (HIP) à une température qui est de 50°C à 150°C inférieure à la température de frittage.

# Fig. 1

1

Europäisches
Patentamt

European
Patent Office

Office européen
des brevets

**RAPPORT DE RECHERCHE EUROPEENNE**

Numéro de la demande

**EP 22 19 1781**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | WO 2018/172428 A1 (HUBLOT SA GENEVE [CH]) 27 septembre 2018 (2018-09-27) * revendications 1-18; figure 2 * ----- | 1-18 | INV. C09C1/00 C04B35/44 C04B35/628 |
| A | WO 2022/063462 A1 (SWATCH GROUP RES & DEV LTD [CH]) 31 mars 2022 (2022-03-31) * alinéa [0004]; revendications 1-21 * ----- | 1-18 | C04B35/488 C04B35/645 C04B35/117 C04B35/119 |
| X | WO 2005/100281 A1 (CENTRE NAT RECH SCIENT [FR]; UNIV LIMOGES [FR] ET AL.) 27 octobre 2005 (2005-10-27) | 1-4 | C04B35/626 |
| A | * page 3, lignes 15-19; revendications 1-36 * ----- | 5-18 | |

**DOMAINES TECHNIQUES RECHERCHES (IPC)**

C09C
C04B

Le présent rapport a été établi pour toutes les revendications

| Lieu de la recherche | Date d'achèvement de la recherche | Examinateur |
|---|---|---|
| La Haye | 26 janvier 2023 | Siebel, Eric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

**EP 4 328 271 A1**

## ANNEXE AU RAPPORT DE RECHERCHE EUROPEENNE
## RELATIF A LA DEMANDE DE BREVET EUROPEEN NO.

EP 22 19 1781

26-01-2023

| Document brevet cité au rapport de recherche | Date de publication | Membre(s) de la famille de brevet(s) | Date de publication |
|---|---|---|---|
| WO 2018172428 A1 | 27-09-2018 | CH 713606 A1 | 28-09-2018 |
| | | CN 110799603 A | 14-02-2020 |
| | | EP 3601440 A1 | 05-02-2020 |
| | | JP 2020514516 A | 21-05-2020 |
| | | KR 20190132422 A | 27-11-2019 |
| | | US 2020031719 A1 | 30-01-2020 |
| | | WO 2018172428 A1 | 27-09-2018 |
| WO 2022063462 A1 | 31-03-2022 | EP 3974405 A1 | 30-03-2022 |
| | | WO 2022063462 A1 | 31-03-2022 |
| WO 2005100281 A1 | 27-10-2005 | EP 1732863 A1 | 20-12-2006 |
| | | FR 2868773 A1 | 14-10-2005 |
| | | JP 2007532454 A | 15-11-2007 |
| | | US 2007182037 A1 | 09-08-2007 |
| | | WO 2005100281 A1 | 27-10-2005 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018172428 A